# EUROPEAN PATENT SPECIFICATION

(11) **EP 3 121 952 B1**
(45) Date of publication and mention of the grant of the patent: **05.12.2018**
(21) Application number: 16157910.7
(22) Date of filing: 29.02.2016
(51) Int. Cl.: H02P 25/08, H02P 25/092

(54) **SWITCHED RELUCTANCE MOTOR WITH A DRIVER CIRCUIT AND METHOD FOR OPERATING A SWITCHED RELUCTANCE MOTOR**
GESCHALTETER RELUKTANZMOTOR MIT TREIBERSCHALTUNG UND VERFAHREN ZUR STEUERUNG EINES GESCHALTETEN RELUKTANZMOTORS
MOTEUR À RÉLUCTANCE COMMUTÉE AVEC CIRCUIT DE COMMANDE ET PROCÉDÉ POUR FAIRE FONCTIONNER UN MOTEUR À RÉLUCTANCE COMMUTÉE

(30) Priority: 21.07.2015 DE 102015213745
(43) Date of publication of application: 25.01.2017
(73) Proprietor: Brose Fahrzeugteile GmbH & Co. Kommanditgesellschaft, Würzburg, 97076 Würzburg (DE)
(72) Inventor: TEODOSESCU, Petre Dorel, Cluj Napoca (RO); POP, Adrian Cornel, 97070 Würzburg (DE); RUSU, Tiberiu, Dej (RO); VINTILOIU, Ionana, 97074 Würzburg (DE)
(74) Representative: FDST Patentanwälte

(56) References cited:
- WO-A1-2014/109218
- US-A- 5 373 195
- US-B1- 7 049 786
- PANDA D ET AL: "A COMPOSITE CONTROL STRATEGY FOR SENSORLESS AND LOW-NOISE OPERATION OF SWITCHED RELUCTANCE MOTOR DRIVE", CONFERENCE RECORD OF THE 2000 IEEE INDUSTRY APPLICATIONS CONFERENCE. 35TH IAS ANNUAL MEETING AND WORLD CONFERENCE ON INDUSTRIAL APPLICATIONS OF ELECTRICAL ENERGY. ROME, ITALY, OCT. 8 - 12, 2000; [CONFERENCE RECORD OF THE IEEE INDUSTRY APPLICATIONS CO, vol. CONF. 35, 8 October 2000 (2000-10-08) , pages 1751-1758, XP001043285, DOI: 10.1109/IAS.2000.882117 ISBN: 978-0-7803-6402-8
- MIR S ET AL: "ENERGY EFFICIENT C-DUMP CONVERTERS FOR SWITCHED RELUCTANCE MOTORS", APEC '96. ELEVENTH ANNUAL APPLIED POWER ELECTRONICS CONFERENCE AND EXPOSITION. SAN JOSE, MAR. 3 - 7, 1996; [ANNUAL APPLIED POWER ELECTRONICS CONFERENCE AND EXPOSITION (APEC)], NEW YORK, IEEE, US, vol. 2, 3 March 1996 (1996-03-03), pages 968-973, XP000585946, ISBN: 978-0-7803-3045-0
- HUIJUN WANG ET AL: "A Modified Multi-Level Converter for Low Cost High Speed SR Drive", POWER ELECTRONICS SPECIALISTS CONFERENCE, 2007. PESC 2007. IEEE, IEEE, PISCATAWAY, NJ, USA, 17 June 2007 (2007-06-17), pages 1790-1795, XP031218550, ISBN: 978-1-4244-0654-8

## Description

The invention relates to a method for operating a polyphase switched reluctance motor, in particular for automotive applications. It furthermore relates to a driver circuit as a power electronic converter for a switched reluctance motor, said driver circuit operating according to such a method.

For some time, usage has increasingly been made of switched reluctance motors (SRMs) as an alternative to conventional brushed as well as brushless electric motors, for highly demanding applications such those met in the automotive sector. The salient type structure of the SRMs have, on the stator side, a polyphase, typically three-phase winding and both a magnet-free and winding-free rotor composed of a highly permeable, soft-magnetic material (for example electrical sheet). The phase windings are energized successively by means of a driver circuit which typically makes usage of pulse-width-modulated (PWM) controlled switching elements (transistors) in order to cause the rotor to turn.

The magnet-free structure of the SRM is characterized by pronounced torque ripple, a low efficiency and undesired noise behaviour during operation. Although these problems can be brought under control, particularly in association with a dynamic mode of operation typically demanded, even at high rotational speeds, this necessitates a sufficiently high supply voltage of the driver circuit for the polyphase energization of the phase windings. In the motor vehicle sector, in particular, the available DC voltage is limited, however, for example to 12 V of a motor vehicle battery or to a 48 V voltage of a DC/DC converter. Therefore, in the motor vehicle sector, hitherto SRMs have often only been used in environments with a high operating temperature, such as, for example, an oil pump of a motor vehicle transmission.

In the low rotational speed range, the phase currents can be provided by the driver circuit in a comparatively simple manner. As the rotational speed increases, however, higher operating voltage values are necessary at least temporarily for the purpose of faster magnetization and demagnetization of the phase windings.

It is known, for example, during the zero levels of the PWM control signals, by means of corresponding circuitry arrangements, to utilize the magnetic energy stored in the phase windings for charging an energy store (typically a capacitor or a coil). The stored charging energy can subsequently be utilized for energizing the phase windings in critical phases. One expedient circuit for such energy recovery is a C discharging circuit (C-dump circuit), as disclosed in US 5,548,196, for example. However, the known circuit does not make it possible, with the energy stored, to raise the level of the operating voltage relative to the supply voltage.

For providing an increased operating voltage it is known to use driver circuits comprising step-up converter circuits in order to up-convert the low supply voltage to an increased value. In this regard, by way of example, US 7,049,786 B1 discloses a DC-DC converter (single-ended primary-inductance converter, SEPIC) for increasing the operating voltage and, coupled thereto, a C discharging circuit for energy recovery. However, the operating voltage is increased independently of the motor rotational speed, as a result of which the operation of the known driver circuit in the low rotational speed range is particularly inefficient and cost-intensive.
The WO 2014/109218 A1 describes a double stator switched reluctance rotation machine with an outer and an inner stator, which are connected in parallel to each other.
The US 5 373 195 A describes an ac electric drive system including a bidirectional power semiconductor interface between a battery and a power inverter for boosting an input DC voltage and for decoupling the DC link voltage from the input DC voltage such that the DC link voltage is substantially independent of the input DC voltage and the parameters of the battery.
In Panda, D., et al, "A composite control strategy for sensorless and low-noise operation of switched reluctance motor drive" (Conference record of the IEEE industry application co, vol. Conf. 35, 2000-10-08, p. 1751-1758) a method for sensorless and low-noise operation of a switched reluctance motor is proposed. In the method a DC bus voltage is varied as a function of rotational speed.
The invention is based on the object of specifying a method for operating a reluctance motor which is improved with regard to operation with a low supply voltage. Furthermore, the intention is to specify a driver circuit for operating a reluctance motor, said driver circuit operating according to said method.

With regard to a switched reluctance motor with a driver circuit, the object is achieved according to the invention by means of the features of Claim 1. Alternatively the object is achieved with a switched reluctance motor with a driver circuit according to the invention by means of the features of Claim 3. With regard to a method for operating a switched reluctance motor with a driver circuit the object is achieved according to the invention by means of the features of claim 5. The respective dependent claims relate to advantageous developments and configurations.
In accordance with the method, for operating a switchable reluctance motor, provision is made for a voltage to be applied from an input voltage source, wherein, during a charging process, a phase winding of the reluctance motor is charged with the energy from the input supply. During a discharging process that takes place after a charging process, the energy from the phase winding is at least partly discharged-transferred to a first energy store element in the course of energy recovery. Furthermore, an up-conversion process is provided, wherein the supply voltage is converted to an increased voltage level, the energy transferred being stored in a second energy store element. During a boost process, the phase winding is supplied with the energy from both energy stores elements. Preferably, provision is made here for the up-conversion process to be initiated depending on a rotational speed of the reluctance motor; in particular, the up-conversion process is performed only at high rotational speeds or in high rotational speed ranges. As a result, on the one hand, an increased operating voltage for high rotational speeds of the reluctance motor is provided; on the other hand, use is advantageously made of the circumstance that, at low rotational speeds, the recovered energy of the discharging process is high enough for a sufficiently fast magnetization and demagnetization of the phase windings.

This enables efficient and cost-effective operation of a switchable reluctance motor even at low supply voltages of, for example, 12 V to 48 V over a wide rotational speed range since the operating voltage can be up-converted relative to the supply voltage as necessary.

Consequently, in a simple manner, the method affords the possibility of equipping the reluctance motor with different operating modes, such that the energization of the phase windings is flexibly adaptable to external conditions during operating, for example for the purpose of handling loads of different power levels. As a result, a reluctance motor operated according to this method becomes usable particularly flexibly.

In this context, high rotational speeds should be understood to mean, in particular, a rotational speed range of the reluctance motor for which, without additional up-conversion of the supply voltage, undesired noise would occur during operation. Correspondingly, low rotational speeds should be understood to mean, in particular, a rotational speed range in which the supply voltage and the energy of the first energy store suffice to suppress undesired noise.

In advantageous developments of the method, the boost process is initiated depending on a rotational speed of the reluctance motor and preferably depending on the energy stored at the first energy store. As a result, on the one hand, the boost process preferably takes place only in a rotational speed range in which the up-conversion process is also initiated. On the other hand, this takes account of the circumstance that, as a result of the boost process, additional energy is charged into the phase windings and thus progressively during a discharging process to the first energy store. The additional initiation of the boost process on the basis of the energy stored at the first energy store thus prevents the energy store from being overcharged, such that the energy is at least partly released again to the phase windings, which is conducive to improved operational reliability of the reluctance motor.

In one preferred embodiment, the boost process is initiated in particular at the beginning of a charging process. The embodiment advantageously makes use of the circumstance that the torque ripple and noise that occur during the operation of a reluctance motor can already be suppressed successfully by means of an accelerated charging process for the phase windings. Furthermore, an accelerated charging process correspondingly brings about an accelerated discharging process, such that no further boost process is required for this.

In principle, two operating modes are possible for reluctance motors, namely an operation in which charging and discharging processes of different individual motor phases temporally succeed one another directly, or secondly an operation in which charging and discharging processes of two or more phase windings temporally overlap at least partly. Particularly for the temporally overlapping operation, in one preferred embodiment of the method, it is provided that, in the case of a simultaneous charging process and discharging process for a plurality of phase windings, a charge-transfer process is initiated. In such a charge-transfer process, the energy of a phase winding of the first motor phase is fed directly into the phase winding of the second motor phase. Particularly uniform and smooth-running operation of the reluctance motor is made possible as a result.

The driver circuit that is suitable and designed for the method comprises a DC voltage source for providing the supply voltage. The driver circuit furthermore comprises an, in particular unipolar, inverter circuit having a number of parallel-connected phase windings with a respective first switching element, said number corresponding to the number of motor phases. There is coupled to the inverter circuit a C discharging circuit, by means of which the respective phase winding is dischargeable to a first capacitor as a first energy store element via a first freewheeling diode in the case of an open switching element. For up-converting the supply voltage to an increased voltage level, a step-up converter circuit is provided, which expediently is electrically conductively arranged between the DC voltage source and the inverter circuit and provides the increased voltage level at a second capacitor as a second energy store element.

For implementing the method, it is provided that the step-up converter circuit is regulated during operation on the basis of a control signal corresponding to the rotational speed of the reluctance motor.

The driver circuit furthermore comprises a second switching element, wherein the second switching element is interconnected between the first capacitor and the first freewheeling diodes, on the one hand, and between the step-up converter circuit and the inverter circuit, on the other hand. Consequently, upon an actuation, the second switching element is interconnected into the driver circuit in particular in such a way that the electrical energy stored or storable at the capacitors is dischargeable directly to the phase winding of the inverter circuit. A simple switching topology with simultaneous maintenance of particularly flexible and simple control over the reluctance motor is provided as a result. The driver circuit is particularly expedient with regard to the production and operating costs as a result.

In one preferred form of application, the reluctance motor is in particular three-phase, and part of a motor vehicle drive. In this case, the DC voltage source is, in particular, a 12 V motor vehicle battery or a 48 V supply voltage of a DC/DC converter of the motor vehicle. As a result of the low supply voltage, the driver circuit for the reluctance motor that is operated according to the method is particularly advantageous since the method results in a reduced noise pollution during operation. As a result, use of the reluctance motor as an electric motor drive in the area of the driver's compartment is fostered or actually made possible in the first place. A reluctance motor operated and interconnected in this way can be used for example as an actuating drive for a window-winding mechanism or a sliding sunroof or for the drive of an air-conditioning system compressor.

The step-up converter circuit preferably comprises a coil (inductance) arranged in a series circuit with a (third) freewheeling diode and a capacitor arranged downstream thereof, in particular the second capacitor. Between the coil and the freewheeling diode, a third switching element is electrically conductively coupled in parallel with the series circuit composed by the input voltage supply and the coil. In the case of a closed switching element, the coil is thus connected relative to earth or the negative pole of the DC voltage source, wherein the current flowing through the coil generates a magnetic field. In the case where the third switching element is opened, the coil attempts to maintain the current flowing through it. As a result, the coil voltage rises until the freewheeling diode opens and the coil discharges to the second capacitor. As a result of repeated opening and closing of the third switching element, therefore, the voltage at the second capacitor is progressively summed, such that it has an increased voltage level with respect to the supply voltage drawn.

Expediently, the voltage at the second capacitor is detected and regulated by a voltage controller in the course of a control loop. For this purpose, it is provided that the detected voltage is compared relative to a reference voltage as control signal as a measure of the motor rotational speed or motor speed. The voltage at the second capacitor is subsequently regulated on the basis of the comparison or the comparison result. In this embodiment, the control signal and respectively the reference voltage are, in particular, a measure of the setpoint speed or setpoint rotational speed of the reluctance motor. For the purposes of the method, therefore, the third switching element is only connected if high rotational speeds of the reluctance motor are necessary during operation.

Preferably, the switching elements are embodied as normally-off transistors, in particular as power metal oxide semiconductor field effect transistors (power MOS-FETs).

For the purpose of driving the second switching element, provision is made of a control unit for outputting an actuating second control signal, wherein, in one preferred embodiment, the second control signal is regulated on the basis of a speed signal corresponding to the rotational speed of the reluctance motor, on the one hand, and on the basis of the voltage present at the first capacitor, on the other hand. The speed signal is preferably a voltage or current signal as a measure of the present actual speed or actual rotational speed of the reluctance motor. In accordance with the method, the regulation on the basis of the voltage present at the first capacitor ensures that the capacitor is not overcharged during operation, in particular after or during a boost process.

In one configuration that is particularly simplified in terms of circuitry, the second capacitor of the step-up converter circuit is simultaneously the first capacitor of the C discharging circuit. As a result, a particularly simple switching topology of the driver circuit is realized, which manifests as an advantageous effect on the production costs.

A second freewheeling diode is connected between the DC voltage source and the inverter circuit, wherein the second switching element is electrically conductively coupled between the output of the step-up converter and the inverter circuit. In a likewise advantageous embodiment, the second freewheeling diode is connected in particular in a short-circuit connection in parallel with the step-up converter circuit. As a result, substantially a direct supply of the inverter circuit with the supply voltage of the DC voltage source is provided, which is utilized in particular in the low rotational speed range if the step-up converter circuit is not active.

The advantages afforded by the invention consist, in particular, in the high effective cross section in the control of the power flow. For this purpose, the driver circuit utilizes the increased operating voltage of the step-up converter circuit only in the range of high rotational speeds. The increased operating voltage for the boost process is provided by means of a hybrid method firstly by the step-up converter circuit at the first capacitor and secondly by the C discharging circuit at the second capacitor. At low rotational speeds, by contrast, operation is possible with only the energy recovered by the C discharging circuit.

The magnetic energy of the phase winding that is recovered during a discharging process is stored as electrical energy at the second capacitor. The electrical voltage generated thereby is thus available as an auxiliary voltage for achieving an increased operating voltage.

The reluctance motor requires an increased operating voltage typically only at specific "critical points", in particular during the charging and discharging of the phase windings. At low rotational speeds, the step-up converter circuit or the third switching element is switched off since the recovered energy of the C discharging circuit during a discharging process is sufficient for reliable and smooth-running motor operation. For high rotational speeds, the step-up converter circuit can provide an increase in the operating voltage as necessary which can be further increased on the basis of the recovered energy.

The invention is not restricted to use in the case of motor vehicle drives; rather, it can be used generally for reluctance motors with a low voltage supply source. Furthermore, other recovery circuits and/or energy stores such as inductances, for example, are also conceivable as part of the driver circuit.

Exemplary embodiments of the invention are explained in greater detail below with reference to a drawing, in which:
- Figure 1: shows a driver circuit for operating a reluctance motor in schematic block illustration,
- Figure 2: shows the switching topology of the driver circuit in schematic illustration,
- Figures 3a to 3c: show the temporal profile of wave-forms during operation of the driver circuit,
- Figure 4: shows a second driver circuit in schematic block illustration, and
- Figure 5: shows the switching topology of the second driver circuit in schematic illustration.

Mutually corresponding parts are always provided with the same reference signs in all of the figures.

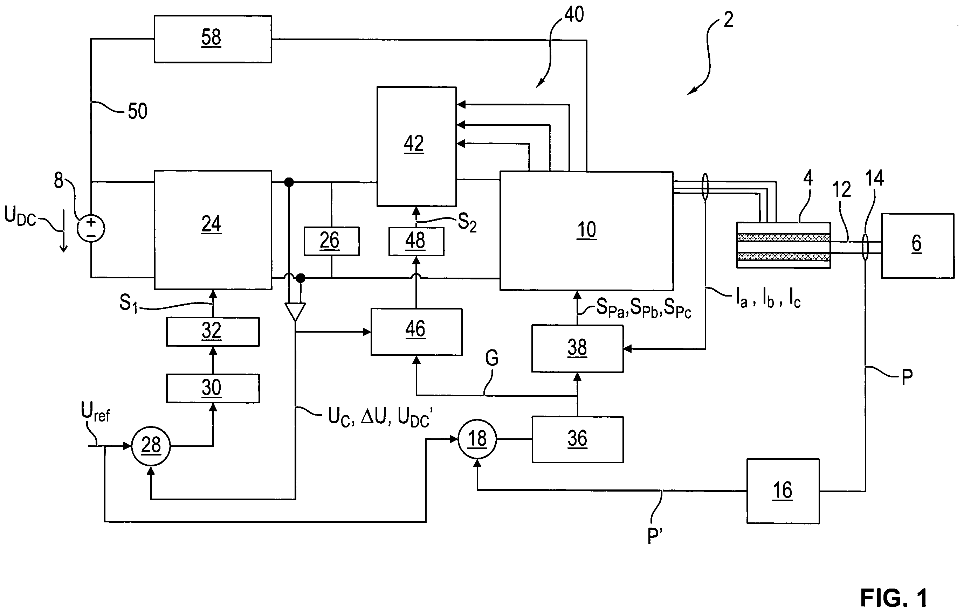

Figure 1 schematically shows a driver circuit 2 for the electronic drive of a switchable reluctance motor 4 for handling (operating) a load 6. The driver circuit 2 comprises a DC voltage source 8, which is interconnected with a unipolar inverter circuit 10 for the purpose of operating the reluctance motor 4. The inverter circuit 10 converts a supply voltage U_{DC} of the DC voltage source 8 into a three-phase AC voltage for the reluctance motor 4, which is designed for handling (operating) the load 6 by means of a drive mechanism 12.

In this embodiment, the reluctance motor 4 is, in particular, part of a motor vehicle drive, in particular of a pump drive of a vehicle transmission or of an air-conditioning system drive. The DC voltage source 8 is, for example, a 12 V battery or a 48 V supply voltage of the motor vehicle.

During the operation of the reluctance motor 4, a position sensor 14 in the region of the drive mechanism 12 detects a position signal P for a position unit 16. The position sensor 14 is embodied as a Hall sensor, for example, wherein a four-pole ring magnet, for example, is arranged on a drive shaft of the drive mechanism 12. During operation, the ring magnet rotates and thereby generates an oscillating alternating magnetic field that is detected as position signal P by the Hall sensor. The position unit 16 determines from the position signal P a signal P' which corresponds to the rotor position and the rotational speed of the reluctance motor 4 and which is transmitted to a first input of a comparator 18 for the purpose of a control loop.

The reluctance motor 4 comprises stator-side phase windings 20a, 20b, 20c as part of the three-phase inverter circuit 10, which are arranged in each case as winding pairs on mutually opposite stator teeth in the sense of stator poles. The reluctance motor 4 furthermore comprises a both magnet-free and winding-free rotor composed of electrical steel-sheets. The phase windings 20a, 20b, 20b are energized successively by means of a respectively assigned switching element 22a, 22b, 22c. The switching elements 22a, 22b, 22c are embodied in particular as normally-off transistors and also designated as such hereinafter.

A step-up converter circuit 24 and an energy store 26 are electrically conductively coupled between the DC voltage source 8 and the inverter circuit 10. The step-up converter circuit 24 converts the supply voltage U_{DC} from the DC voltage source 8 to an increased value U_{DC}' relative thereto. As part of the step-up converter circuit 24, the DC or operating voltage U_{DC}' that is output is summed on the energy store 26, also designated as capacitor hereinafter.

The voltage U_{C} present at the capacitor 26 is compared with a control signal or a reference voltage U_{ref} by a control loop. For this purpose, the capacitor voltage U_{c} at the capacitor 26 is tapped off and passed to a first input of a comparator 28. The reference voltage U_{ref} is applied to the second input of the comparator 28. The comparator 28 is coupled to a voltage controller 30, which, depending on the comparator voltage that is output, drives a pulse width modulation circuit (PWM circuit) 32 for outputting a PWM signal S₁ for a switching element (transistor) 34 of the step-up converter circuit 24.

For regulating the rotational speed of the reluctance motor 4, and thus with regard to the adjustment speed of the load 6, the reference voltage U_{ref} is additionally applied as a measure of speed to the second input of the comparator 18. On the basis of the reference voltage U_{ref} fed in and the signal P', the comparator 18 passes an output signal to a speed controller 36. On the basis of these signals, the speed controller 36 drives a circuit 38 for regulating the supply voltage of the phase windings 20a, 20b, 20c with a speed signal G. The circuit 38 is embodied for example as a PWM or hysteresis circuit and is suitable and designed for generating a phase excitation signal S_{Pa}, S_{Pb}, S_{Pc} for switching the transistors 22a, 22b, 22c. The circuit 38 furthermore detects the phase current Iₐ, I_{b}, I_{c} flowing through the phase windings 20a, 20b, 20c.

On the basis of the speed signal G and the detected phase currents Iₐ, I_{b}, I_{c}, the phase windings 20a, 20b, 20c voltages are controlled and regulated by the opening and closing of the transistors 22a, 22b, 22c by means of the phase excitation signals S_{Pa}, S_{Pb}, S_{Pc} from the circuit 38.

Upon energization of one of the phase windings 20a, 20b, 20c, a magnetic field is generated which causes the rotor of the reluctance motor 4 to rotate. If the respective transistor 22a, 22b, 22c opens, then a back-EMF is generated in the assigned phase winding 20a, 20b, 20c and discharges the magnetic energy of the phase windings 20a, 20b, 20c during a discharging process, such that they are ready for renewed energization and thus for continuous operation of the rotor.

During the discharging process, the phase winding 20a, 20b, 20c discharges via a C discharging circuit 40 as part of an energy recovery 42 to the capacitor 26, such that at least part of the magnetic energy is recovered. The recovered energy is thus applied and stored as an electrical voltage ΔU on the capacitor 26 in addition or as an alternative to the up-converted operating voltage U_{DC}'. The energy recovery 42 comprises a switching element or transistor 44 by means of which the capacitor 26 can be discharged directly to the phase windings 20a, 20b, 20c.

The transistor 44 is driven by a control logic 46 in a manner dependent on the capacitor voltage U_{C} and the speed signal G. The control logic 46 is coupled to a circuit 48 that is suitable and designed for communicating an actuating control signal S₂ to the transistor 44 on the basis of the signals transmitted by the control logic.

A bypass-circuit connection 50 is connecting the input power supply to the inverter circuit 10 that can be operated directly with the supply voltage U_{DC} in particular at low rotational speeds of the reluctance motor 4.

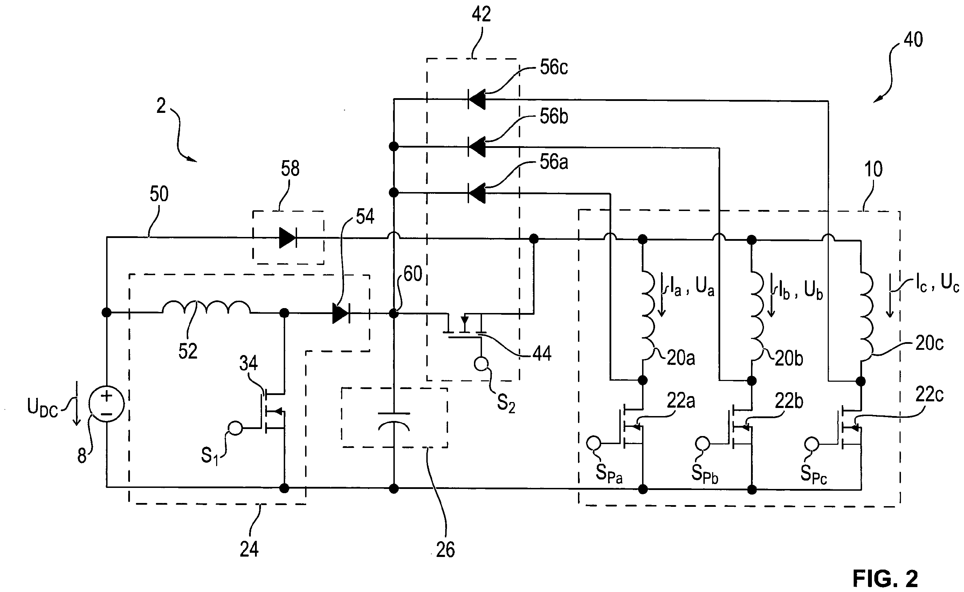

The electrical topology of the driver circuit 2 is explained in greater detail with reference to Figure 2. In the exemplary embodiment illustrated, the step-up converter circuit 24 comprises of a coil 52, a freewheeling diode 54, and the transistor 34. As is comparatively clearly evident in Figure 2, the transistor 34 is substantially connected in parallel with the series circuit composed by the voltage supply 8 and the coil 52.

During an up-conversion process, the supply voltage U_{DC} is applied to the coil 52 in the case of a closed transistor 34. The coil 52 is charged with magnetic energy which is charged onto the capacitor 26 upon opening of the transistor 34 via the freewheeling diode 54. As a result of repeated switching of the transistor 34, the capacitor voltage U_{C} is thus gradually summed further until the voltage value predefined by the reference voltage U_{ref} is attained.

In this exemplary embodiment, the energy recovery 42 comprises the C discharging circuit 40, which substantially comprises a respective freewheeling diode 56a, 56b, 56c per phase winding 20a, 20b, 20c, and also the capacitor 26. As a result, a node 60 is formed between the freewheeling diodes 54, 56a, 56b, 56c and the capacitor 26, to which node the transistor 44 is furthermore connected. The transistor 44 is thereby electrically conductively coupled firstly between the freewheeling diode 54 and the capacitor 26 and secondly to the latter on the inverter side downstream of a freewheeling diode 58 of the bypass-circuit connection 50.

During normal operation, the inverter circuit 10 is directly supplied with the supply voltage U_{DC} via the freewheeling diode 58 of the bypass-circuit connection 50. During normal operation, the transistor 34 is continuously open, such that no up-conversion process takes place. If the supply voltage U_{DC} is applied, firstly the phase excitation signal S_{Pa} is applied to the transistor 22a, as a result of which the transistor 22a is switched on. As a result, a first charging process takes place, in which a current flows through the phase winding 20a, such that a magnetic field is generated by the latter and the rotor of the reluctance motor 4 is caused to rotate.

Afterwards, the phase excitation signal S_{Pa} is switched off, as a result of which the transistor 22a is opened. The excitation current stored in the magnetic field of the phase winding 20a flows, during a discharging process, from the phase winding 20a through the freewheeling diode 56a and via the node 60 into the capacitor 26, and applies the voltage ΔU to the capacitor 26. As a result, substantially a complete energy recovery of the magnetic energy of the phase winding 20a into the electrical energy of the capacitor 26 is realized (disregarding heat losses).

The voltage ΔU is available to the subsequent motor phase for energization. For this purpose, simultaneously, firstly the control signal S₂ is applied to the transistor 44 and secondly the phase excitation signal S_{Pb} is applied to the transistor 20b and said transistors are thus closed. As a result, the voltage U_{C} of the capacitor 26 is dischargeable to the phase winding 20b. The capacitor 26 thus substantially serves as a second voltage source, for supplying the phase winding 20b.

The phase winding 20b is supplied with electrical energy firstly by the capacitor 26 and secondly by the DC voltage source 8. Afterwards, the communication of the phase excitation signal S_{Pb} is ended and the discharging process of the phase winding 20b is thus initiated, and the capacitor 26 is charged. The process is continuously repeated for the three phase windings 20a, 20b, 20c.

For high rotational speeds or for handling (operating) a heavy load 6, the DC voltages U_{DC} and ΔU are not sufficient for sufficiently fast charging and discharging of the phase windings 20a, 20b, 20c. Therefore, the driver circuit 2 is additionally designed for high-speed operation in which the step-up converter circuit 24 can be supplementary connected in as necessary by the voltage controller 30. In high-speed operation, one or a plurality of up-conversion processes are carried out in addition to the discharging process, such that the voltage U_{C} present at the capacitor is significantly greater than the supply voltage U_{DC}. During a boost process, this increased voltage U_{C} discharges to a respective phase winding 20a, 20b, 20c in the course of the charging process.

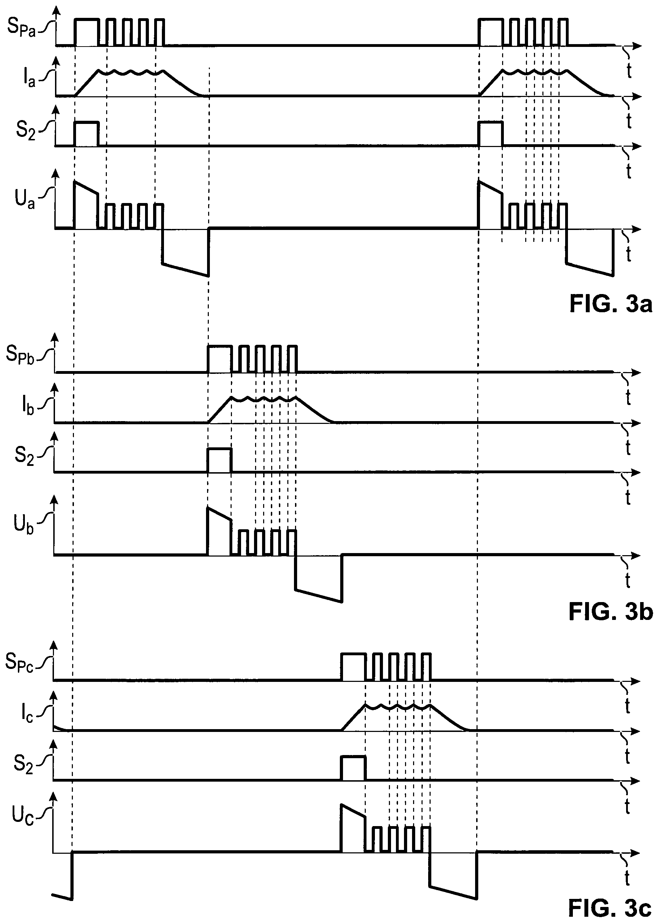

With reference to Figures 3a to 3c, the high-speed operation of the driver circuit 2 is explained in greater detail below on the basis of a series drive signals of the phase windings 20a, 20b, 20c. Figures 3a to 3c show by way of example the profile of the phase excitation signal S_{Pa}, S_{Pb}, S_{Pc}, of the phase current Iₐ, I_{b}, I_{c}, of the control signal S₂ and also a voltage Uₐ, U_{b}, U_{c} of the phase winding 20a, 20b, 20c for the three motor phases a, b, c, plotted against time t. As is comparatively clear in the figures, the transistors 22a, 22b, 22c and 34 are driven by means of pulsed, in particular pulse-width-modulated, voltage signals.

At the beginning of a charging process, the (charged) capacitor 26 is supplementary connected in for supplying the phase winding 20a, 20b, 20c as a boost process, that is to say that both the transistor 44 and the transistor 22a, 22b, 22c are turned on by the control signal S₂ and the phase excitation signals S_{Pa}, S_{Pb}, S_{Pc}. As a result, the phase current Iₐ, I_{b}, I_{c} through the phase winding 20a, 20b, 20c rises and the voltage Uₐ, U_{b}, U_{c} increases. After the boost process, switching on and off is effected by means of the phase excitation signal S_{Pa}, S_{Pb}, S_{Pc} in the course of the PWM, as a result of which a charging process and discharging process of the phase winding 20a, 20b, 20c take place alternately. In this case, the duty ratio of the phase excitation signal S_{Pa}, S_{Pb}, S_{Pc} is chosen, in particular, in such a way that the phase current Iₐ, I_{b}, I_{c} remains as constant as possible. In particular, the phase current Iₐ, I_{b}, I_{c} has an approximately trapezoidal-shaped profile during the operation of the phase winding 20a, 20b, 20c, wherein the phase current Iₐ, I_{b}, I_{c} is almost constant during the successive charging and discharging processes, such that a constant torque acts on the rotor of the reluctance motor 4.

During motor operation in which the phases at least partly overlap, that is to say that at least two phase excitation signals S_{Pa}, S_{Pb}, S_{Pc} are simultaneously applied to the transistors 22a, 22b, 22c, the transistor 44 is turned on. As a result, the magnetic energy of a first phase winding 20a, 20b, 20c can be fed in a freewheeling manner directly into a second phase winding 20a, 20b, 20c.

The maximum voltage of the capacitor 26 is limited for safety reasons. If the voltage U_{C} reaches its maximum value during the high-speed operation, then the control logic 46 causes the circuit 48 to output the control signal S₂. The transistor 44 is turned on thereby, such that the capacitor voltage U_{C} is applied continuously to the phase windings 20a, 20b, 20c.

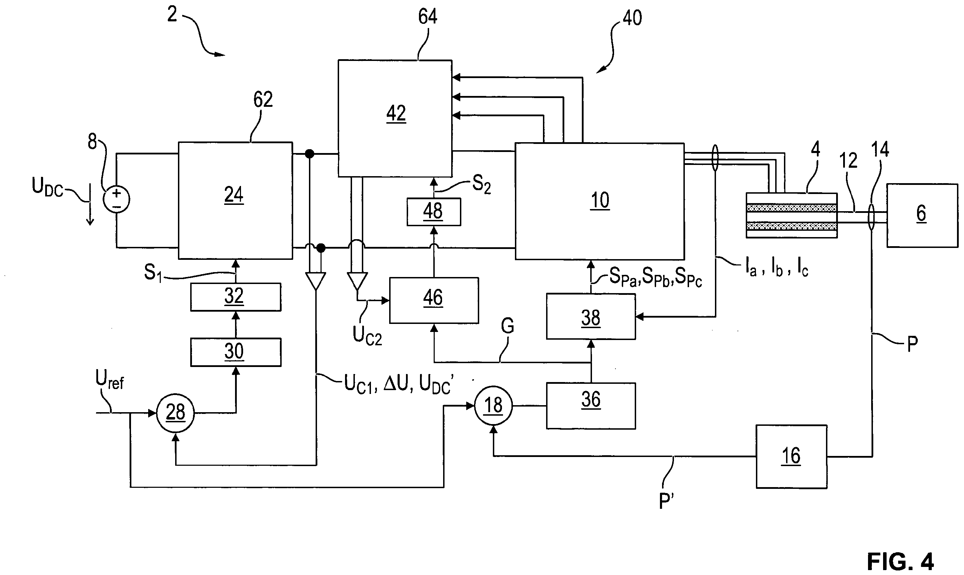

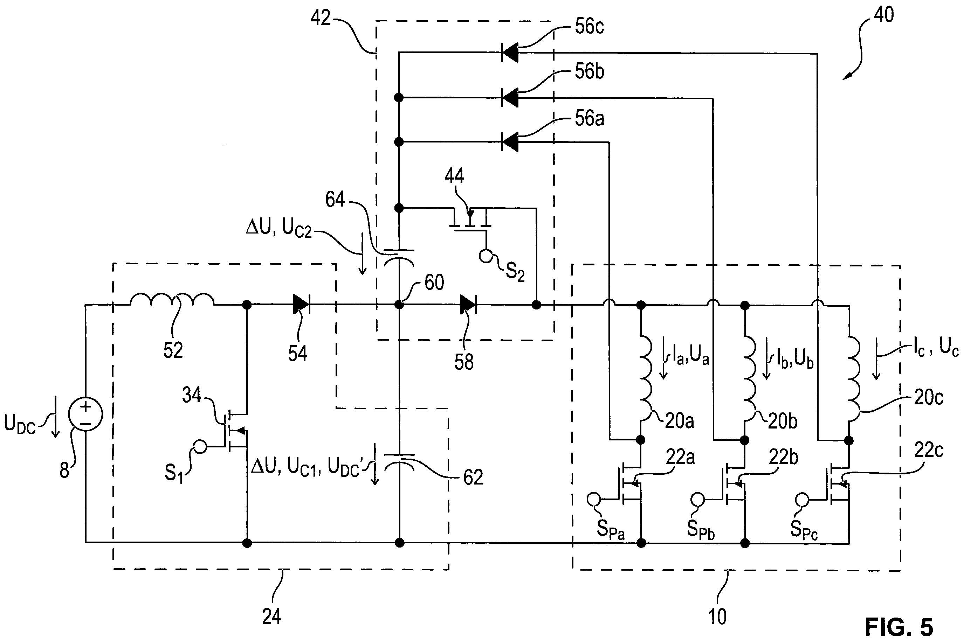

A second exemplary embodiment of the driver circuit 2 is explained in greater detail with reference to Figure 4 and Figure 5. In this embodiment, the step-up converter circuit 24 and the C discharging circuit 40 comprise two separate capacitors 62 and 64. Furthermore, the bypass-circuit connection 50 is omitted, the freewheeling diode 58 being connected in series between the freewheeling diode 54 of the step-up converter circuit 24 and the inverter circuit 10. In this embodiment, the node 60 is arranged between the capacitors 62 and 64, on the one hand, and between the freewheeling diodes 54 and 58, on the other hand. The transistor 44 is connected between the freewheeling diodes 56a, 56b, 56c and the capacitor 64, on the one hand, and between the freewheeling diode 58 and the inverter circuit 10, on the other hand.

A capacitor voltage U_{C1} of the capacitor 62 is fed in with the reference voltage at the comparator 28 for the purpose of regulating the step-up converter circuit 24. A capacitor voltage U_{C2} of the capacitor 64 is communicated to the control logic 46 for the purpose of controlling the transistor 44.

During normal operation of the reluctance motor 4, in this exemplary embodiment, firstly the phase excitation signal S_{Pa} is applied to the transistor 22a. The transistors 34 and 44 are open, such that a current flows from the DC voltage source 8 via the coil 52 and the freewheeling diodes 54 and 58 into the phase winding 20a during the charging process. Upon opening of the transistor 22a, the capacitor 64 is in a charging process, such that the magnetic energy of the phase winding 20a, in accordance with the capacitance value of the capacitor 64, is distributed as electrical energy via the diodes 56a and 58.

For the energization of the phase winding 20b, subsequently simultaneously, firstly the control signal S₂ is applied to the transistor 44 and secondly the phase excitation signal S_{Pb} is applied to the transistor 20b. As a result, the electrical energy stored in the capacitors 62 and 64, connected now in series, builds up therefrom at the phase winding 20b; furthermore, energy is additionally fed in from the DC voltage source 8. After the phase excitation signal S_{Pb} has been switched off, the phase winding 20b in turn discharges to the capacitor 64 via the diodes 56b and 58. The process is continuously repeated for the three phase windings 20a, 20b, 20c.

During high-speed operation, up-conversion processes are added to normal operation. Firstly, the phase excitation signal S_{Pa} is applied to the transistor 22a, and the phase winding 20a is supplied by the capacitor 62 and the DC voltage source 8.

Afterwards, the PWM signal S₁ is applied to the transistor 34. As a result, firstly the coil 52 is charged with magnetic energy from the DC voltage source 8. Secondly, the phase winding 20a is electrically conductively coupled to the capacitor 62 and is supplied with the capacitor voltage U_{C1}.

In the next step, the transistor 22a is switched off and the phase winding 20a discharges into the capacitor 64 via the freewheeling diodes 56a and 58. Afterwards, the transistor 34 is opened, such that the energy flows from the coil 52 via the freewheeling diodes 54 and 58 into the phase winding 20a.

For energizing the phase winding 20b, the phase excitation signal S_{Pb}, the control signal S₂ and the PWM signal S₁ are switched on. As a result, the coil 52 is charging with energy, while the phase winding 20b takes up the energy from the capacitors 62 and 64. As additional feed-in, it is subsequently or alternatively possible to switch off the PWM signal S₁ (again), such that the energy of the coil 52 is additionally fed into the phase winding 20b. The transistor 44 is turned off and the process is repeated continuously for the phase windings 20a, 20b, 20c.

### List of reference signs

- 2: Driver circuit
- 4: Reluctance motor
- 6: Load
- 8: DC voltage source
- 10: Inverter circuit
- 12: Drive mechanism
- 14: Position sensor
- 16: Position unit
- 18: Comparator
- 20a, 20b, 20c: Phase winding
- 22a, 22b, 22c: Switching element/transistor
- 24: Step-up converter circuit
- 26: Energy store/capacitor
- 28: Comparator
- 30: Voltage controller
- 32: PWM circuit
- 34: Switching element/transistor
- 36: Speed controller
- 38: PWM/hysteresis circuit
- 40: C discharging circuit
- 42: Energy recovery
- 44: Switching element/transistor
- 46: Control logic/control unit
- 48: Circuit
- 50: Bypass-circuit connection
- 52: Coil
- 54: Freewheeling diode
- 56a, 56b, 56c: Freewheeling diode
- 58: Freewheeling diode
- 60: Node
- 62: Energy store/capacitor
- 64: Energy store/capacitor
- U_{DC}: DC voltage/supply voltage
- U_{DC}': DC voltage/operating voltage
- P: Position signal
- P': Signal
- U_{ref}: Control signal/reference voltage
- U_{C}, U_{C1}, U_{C2}: DC voltage/capacitor voltage
- S₁: PWM signal
- S₂: Control signal
- S_{Pa}, S_{Pb}, S_{Pc}: Phase excitation signal
- G: Speed signal
- t: Time
- ΔU: Voltage
- Uₐ, U_{b}, U_{c}: Voltage
- Iₐ, I_{b}, I_{c}: Phase current

## Claims

1. Switched reluctance motor (4) with a driver circuit (2) comprising
- a DC voltage source (8) for providing a supply voltage (U_{DC}),
- an inverter circuit (10), comprising a number of parallel-connected phase windings (20a, 20b, 20c) of the motor (4) with a respective first switching element (22a, 22b, 22c), said number corresponding to the number of motor phases,
- a C discharging circuit (40), by means of which the respective phase winding (20a, 20b, 20c) is dischargeable to a first capacitor (64) via a first freewheeling diode (56a, 56b, 56c) in the case of an open first switching element (22a, 22b, 22c), the first freewheeling diode (56a, 56b, 56c) being connected to a first terminal of the first capacitor (64),
- a step-up converter circuit (24) for up-converting the supply voltage (U_{DC}) at a first terminal of a second capacitor (62), wherein during operation the up-converted voltage (U_{DC}') at the second capacitor (62) is regulated on the basis of a control signal (U_{ref}) corresponding to a rotational speed of the reluctance motor (4), and wherein a second terminal of the first capacitor (64) is connected to the first terminal of the second capacitor (62),
- a second freewheeling diode (58) connected between an output of the step-up converter (24) and a common connection node of the phase windings (20a, 20b, 20c) of the inverter circuit (10), and
- a second switching element (44), wherein the second switching element (44) is electrically conductively coupled to the first terminal of the first capacitor (64) connected to the first freewheeling diodes (56a, 56b, 56c), on the one hand, and to a connection node of the second freewheeling diode (58) with the common connection node of the phase windings (20a, 20b, 20c) of the inverter circuit (10) on the other hand, wherein, upon an actuation of the second switching element (44), the capacitors (62, 64) are dischargeable directly to the phase winding (20a, 20b, 20c).

2. Switched reluctance motor (4) with a driver circuit (2) according to Claim 1, **characterized**
**in that** the second switching element (44) is regulated on the basis of a speed signal (G) corresponding to the rotational speed of the reluctance motor (4), on the one hand, and on the basis of a voltage ( U_{C2}) present at the first capacitor (64), on the other hand.

3. Switched reluctance motor (4) with a driver circuit (2), comprising
- a DC voltage source (8) for providing a supply voltage (U_{DC}),
- an inverter circuit (10), comprising a number of parallel-connected phase windings (20a, 20b, 20c) of the motor (4) with a respective first switching element (22a, 22b, 22c), said number corresponding to the number of motor phases,
- a C discharging circuit (40), by means of which the respective phase winding (20a, 20b, 20c) is dischargeable to a first capacitor (26) via a first freewheeling diode (56a, 56b, 56c) in the case of an open first switching element (22a, 22b, 22c),
- a step-up converter circuit (24) for up-converting the supply voltage (U_{DC}) at the first capacitor (26), wherein during operation the up-converted voltage (U_{DC}') at the first capacitor (26) is regulated on the basis of a control signal (U_{ref}) corresponding to a rotational speed of the reluctance motor (4),
- a second freewheeling diode (58) connected between the DC voltage source (8) and a common connection node of the phase windings (20a, 20b, 20c) of the inverter circuit (10), and
- a second switching element (44), wherein the second switching element (44) is electrically conductively coupled to a connection node of the first capacitor (26) with the first freewheeling diodes (56a, 56b, 56c), on the one hand, and to a connection node of the second freewheeling diode (58) and the common connection node of the phase windings (20a, 20b, 20c) of the inverter circuit (10) on the other hand, wherein, upon an actuation of the second switching element (44), the first capacitor (26) is dischargeable directly to the phase winding (20a, 20b, 20c).

4. Switched reluctance motor (4) with a driver circuit (2) according to claim 3, **characterized**
**in that** the second freewheeling diode (58) is connected in a bypass-circuit connection (50) in regard with the step-up converter circuit (24).

5. Method for operating a switched reluctance motor (4) with a driver circuit (2) according to any of the claims 1 to 4,
- wherein the supply voltage (U_{DC}) is drawn from the DC voltage source (8),
- wherein, during a charging process, the phase winding (20a, 20b, 20c) of the reluctance motor (4) is charged with the energy of the supply voltage,
- wherein, during a discharging process, the first switching element (22a, 22b, 22c) is opened and the energy from the phase winding (20a, 20b, 20c) is discharge-transferred to the first capacitor (26, 64),
- wherein, during an up-conversion process, the supply voltage (U_{DC}) is up-converted to an increased voltage level (U_{DC}') via the step-up converter circuit (24),
- wherein the up-conversion process is initiated depending on the rotational speed of the reluctance motor (4), and
- wherein, during a boost process, the second switching element (44) is actuated and the phase winding (20a, 20b, 20c) is supplied with the stored energy of the capacitor (26, 62).

6. Method according to Claim 5,
**characterized**
**in that** the boost process is initiated at high rotational speeds of the reluctance motor (4).

7. Method according to Claim 5 or 6,
**characterized**
**in that** the boost process is initiated depending on a comparison of the energy stored at the first capacitor (26, 64) and a control signal (U_{ref}).

8. Method according to any of Claims 5 to 7,
**characterized**
**in that** the boost process is initiated at the beginning of the charging process.

9. Method according to any of Claims 5 to 8,
**characterized**
**in that**, in case of a simultaneous charging process and discharging process for a plurality of phase windings (20a, 20b, 20c), a charge-transfer process is initiated, wherein the energy of a phase winding (20a, 20b, 20c) of a first motor phase is conducted directly into a phase winding (20a, 20b, 20c) of a second motor phase.

## Patentansprüche

1. Geschalteter Reluktanzmotor (4) mit einer Treiberschaltung (2), umfassend
- eine Gleichspannungsquelle (8) zum Bereitstellen einer Versorgungsspannung (U_{DC}),
- eine Wechselrichterschaltung (10), die eine Anzahl von parallel geschalteten Phasenwicklungen (20a, 20b, 20c) des Motors (4) mit einem entsprechenden ersten Schaltelement (22a, 22b, 22c) umfasst, wobei die Anzahl der Anzahl von Motorphasen entspricht,
- eine C-Entladeschaltung (40), mit der die jeweilige Phasenwicklung (20a, 20b, 20c) über eine erste Freilaufdiode (56a, 56b, 56c) bei einem offenen ersten Schaltelement (22a, 22b, 22c) auf einen ersten Kondensator (64) entladbar ist, wobei die erste Freilaufdiode (56a, 56b, 56c) an einen ersten Anschluss des ersten Kondensators (64) angeschlossen ist,
- eine Aufwärtswandlerschaltung (24) zum Aufwärtswandeln der Versorgungsspannung (U_{DC}) an einem ersten Anschluss eines zweiten Kondensators (62), wobei während eines Betriebs die aufwärts gewandelte Spannung (U_{DC'}) am zweiten Kondensator (62) auf der Grundlage eines Steuersignals (U_{ref}) entsprechend einer Drehgeschwindigkeit des Reluktanzmotors (4) geregelt wird, und wobei ein zweiter Anschluss des ersten Kondensators (64) mit dem ersten Anschluss des zweiten Kondensators (62) verbunden ist,
- eine zweite Freilaufdiode (58), die zwischen einem Ausgang des Aufwärtswandlers (24) und einem gemeinsamen Verbindungsknoten der Phasenwicklungen (20a, 20b, 20c) der Wechselrichterschaltung (10) geschaltet ist, und
- ein zweites Schaltelement (44), wobei das zweite Schaltelement (44) einerseits mit dem ersten Anschluss des ersten Kondensators (64), der mit den ersten Freilaufdioden (56a, 56b, 56c) verbunden ist, und andererseits mit einem Verbindungsknoten der zweiten Freilaufdiode (58) mit dem gemeinsamen Verbindungsknoten der Phasenwicklungen (20a, 20b, 20c) der Wechselrichterschaltung (10) elektrisch leitend gekoppelt ist, wobei bei einer Betätigung des zweiten Schaltelements (44) die Kondensatoren (62, 64) direkt zu der Phasenwicklung (20a, 20b, 20c) entladbar sind.

2. Geschalteter Reluktanzmotor (4) mit einer Treiberschaltung (2) nach Anspruch 1, **dadurch gekennzeichnet, dass** das zweite Schaltelement (44) einerseits auf der Grundlage eines Geschwindigkeitssignals (G) entsprechend der Drehgeschwindigkeit des Reluktanzmotors (4) und andererseits auf der Grundlage einer Spannung (U_{C2}), die an dem ersten Kondensator (64) anliegt, geregelt wird.

3. Geschalteter Reluktanzmotor (4) mit einer Treiberschaltung (2), umfassend
- eine Gleichspannungsquelle (8) zum Bereitstellen einer Versorgungsspannung (U_{DC}),
- eine Wechselrichterschaltung (10), die eine Anzahl von parallel geschalteten Phasenwicklungen (20a, 20b, 20c) des Motors (4) mit einem entsprechenden ersten Schaltelement (22a, 22b, 22c) umfasst, wobei die Anzahl der Anzahl von Motorphasen entspricht,
- eine C-Entladeschaltung (40), mit der die jeweilige Phasenwicklung (20a, 20b, 20c) über eine erste Freilaufdiode (56a, 56b, 56c) bei einem offenen ersten Schaltelement (22a, 22b, 22c) auf einen ersten Kondensator (26) entladbar ist,
- eine Aufwärtswandlerschaltung (24) zum Aufwärtswandeln der Versorgungsspannung (U_{DC}) an dem ersten Kondensator (26), wobei während eines Betriebs die aufwärts gewandelte Spannung (U_{DC'}) am ersten Kondensator (26) auf der Grundlage eines Steuersignals (U_{ref}) entsprechend einer Drehgeschwindigkeit des Reluktanzmotors (4) geregelt wird,
- eine zweite Freilaufdiode (58), die zwischen der Gleichspannungsquelle (8) und einem gemeinsamen Verbindungsknoten der Phasenwicklungen (20a, 20b, 20c) der Wechselrichterschaltung (10) geschaltet ist, und
- ein zweites Schaltelement (44), wobei das zweite Schaltelement (44) einerseits mit einem Anschlussknoten des ersten Kondensators (26) mit den ersten Freilaufdioden (56a, 56b, 56c) und andererseits mit einem Verbindungsknoten der zweiten Freilaufdiode (58) und dem gemeinsamen Verbindungsknoten der Phasenwicklungen (20a, 20b, 20c) der Wechselrichterschaltung (10) elektrisch leitend gekoppelt ist, wobei bei einer Betätigung des zweiten Schaltelements (44) der erste Kondensator (26) direkt auf die Phasenwicklung (20a, 20b, 20c) entladbar ist.

4. Geschalteter Reluktanzmotor (4) mit einer Treiberschaltung (2) nach Anspruch 3, **dadurch gekennzeichnet, dass** die zweite Freilaufdiode (58) in einer Bypassschaltungs-Verbindung (50) in Bezug auf die Aufwärtswandlerschaltung (24) verbunden ist.

5. Verfahren zum Betreiben eines geschalteten Reluktanzmotors (4) mit einer Treiberschaltung (2) nach einem der Ansprüche 1 bis 4,
- wobei die Versorgungsspannung (U_{DC}) von der Gleichspannungsquelle (8) gezogen wird,
- wobei während eines Ladevorgangs die Phasenwicklung (20a, 20b, 20c) des Reluktanzmotors (4) mit der Energie der Versorgungsspannung geladen wird,
- wobei während eines Entladevorgangs das erste Schaltelement (22a, 22b, 22c) geöffnet wird und die Energie aus der Phasenwicklung (20a, 20b, 20c) auf den ersten Kondensator (26, 64) entladen-übertragen wird,
- wobei während eines Aufwärtswandlungsvorgangs die Versorgungsspannung (U_{DC}) über die Aufwärtswandlerschaltung (24) auf einen erhöhten Spannungspegel (U_{DC'}) aufwärts gewandelt wird,
- wobei der Aufwärtsumwandlungsvorgang in Abhängigkeit von der Drehgeschwindigkeit des Reluktanzmotors (4) eingeleitet wird, und
- wobei während eines Verstärkungsvorgangs das zweite Schaltelement (44) betätigt wird und der Phasenwicklung (20a, 20b, 20c) die gespeicherte Energie des Kondensators (26, 62) zugeführt wird.

6. Verfahren nach Anspruch 5, **dadurch gekennzeichnet, dass** der Verstärkungsvorgang bei hohen Drehgeschwindigkeiten des Reluktanzmotors (4) eingeleitet wird.

7. Verfahren nach Anspruch 5 oder 6, **dadurch gekennzeichnet, dass** der Verstärkungsvorgang in Abhängigkeit von einem Vergleich der am ersten Kondensator (26, 64) gespeicherten Energie und einem Steuersignal (U_{ref}) eingeleitet wird.

8. Verfahren nach einem der Ansprüche 5 bis 7, **dadurch gekennzeichnet, dass** der Verstärkungsvorgang zu Beginn des Ladevorgangs eingeleitet wird.

9. Verfahren nach einem der Ansprüche 5 bis 8, **dadurch gekennzeichnet, dass** im Fall eines gleichzeitigen Lade- und Entladevorgangs für eine Vielzahl von Phasenwicklungen (20a, 20b, 20c) ein Ladungsübertragungsvorgang eingeleitet wird, wobei die Energie einer Phasenwicklung (20a, 20b, 20c) einer ersten Motorphase direkt in eine Phasenwicklung (20a, 20b, 20c) einer zweiten Motorphase geleitet wird.

## Revendications

1. Moteur à réluctance commutée (4) muni d'un circuit d'attaque (2) comprenant
- une source de tension continue (8) pour fournir une tension d'alimentation (U_{DC}),
- un circuit inverseur (10), comprenant un certain nombre d'enroulements de phase (20a, 20b, 20c) du moteur (4) connectés en parallèle avec chacun un premier élément de commutation (22a, 22b, 22c), ledit certain nombre correspondant au nombre de phases du moteur,
- un circuit de décharge C (40) au moyen duquel l'enroulement de phase correspondant (20a, 20b, 20c) peut être déchargé vers un premier condensateur (64) par l'intermédiaire d'une première diode de roue libre (56a, 56b, 56c) dans le cas où un premier élément de commutation (22a, 22b, 22c) est ouvert, la première diode de roue libre (56a, 56b, 56c) étant connectée à une première borne du premier condensateur (64),
- un circuit convertisseur élévateur (24) pour la conversion ascendante de la tension d'alimentation (U_{DC}) d'une première borne d'un deuxième condensateur (62), la tension convertie augmentée (U_{DC'}) appliquée au deuxième condensateur (62) étant régulée pendant le fonctionnement sur la base d'un signal de commande (U_{ref}) correspondant à une vitesse de rotation du moteur à reluctance (4), et une deuxième borne du premier condensateur (64) étant connectée à la première borne du deuxième condensateur (62),
- une deuxième diode de roue libre (58) connectée entre une sortie du convertisseur élévateur (24) et un noeud de connexion commun des enroulements de phase (20a, 20b, 20c) du circuit inverseur (10), et
- un deuxième élément de commutation (44), le deuxième élément de commutation (44) étant couplé de manière électriquement conductrice d'une part à la première borne du premier condensateur (64) connectée aux premières diodes de roue libre (56a, 56b, 56c), et d'autre part à un noeud de connexion de la deuxième diode de roue libre (58) avec le noeud de connexion commun des enroulements de phase (20a, 20b, 20c) du circuit inverseur (10), les condensateurs (62, 64) pouvant être directement déchargés sur l'enroulement de phase (20a, 20b, 20c) lors d'un actionnement du deuxième élément de commutation (44).

2. Moteur à réluctance commutée (4) muni d'un circuit d'attaque (2) selon la revendication 1,
**caractérisé en ce que**
le deuxième élément de commutation (44) est régulé d'une part sur la base d'un signal de vitesse (G) correspondant à la vitesse de rotation du moteur à réluctance (4), et d'autre part sur la base d'une tension (U_{C2}) appliquée au premier condensateur (64).

3. Moteur à réluctance commutée (4) muni d'un circuit d'attaque (2), comprenant
- une source de tension continue (8) pour fournir une tension d'alimentation (U_{DC}),
- un circuit inverseur (10), comprenant un certain nombre d'enroulements de phase (20a, 20b, 20c) du moteur (4) connectés en parallèle avec chacun un premier élément de commutation (22a, 22b, 22c), ledit certain nombre correspondant au nombre de phases du moteur,
- un circuit de décharge C (40) au moyen duquel l'enroulement de phase correspondant (20a, 20b, 20c) peut être déchargé vers un premier condensateur (26) par l'intermédiaire d'une première diode de roue libre (56a, 56b, 56c) dans le cas où un premier élément de commutation (22a, 22b, 22c) est ouvert,
- un circuit convertisseur élévateur (24) pour la conversion ascendante de la tension d'alimentation (U_{DC}) appliquée au premier condensateur (26), la tension convertie augmentée (U_{DC'}) appliquée au premier condensateur (26) étant régulée pendant le fonctionnement sur la base d'un signal de commande (U_{ref}) correspondant à une vitesse de rotation du moteur à reluctance (4),
- une deuxième diode de roue libre (58) connectée entre la source de tension continue (8) et un noeud de connexion commun des enroulements de phase (20a, 20b, 20c) du circuit inverseur (10), et
- un deuxième élément de commutation (44), le deuxième élément de commutation (44) étant couplé de manière électriquement conductrice d'une part à un noeud de connexion du premier condensateur (26) avec les premières diodes de roue libre (56a, 56b, 56c), et d'autre part à un noeud de connexion de la deuxième diode de roue libre (58) avec le noeud de connexion commun des enroulements de phase (20a, 20b, 20c) du circuit inverseur (10), le premier condensateur (26) pouvant être directement déchargé sur l'enroulement de phase (20a, 20b, 20c) lors d'un actionnement du deuxième élément de commutation (44).

4. Moteur à réluctance commutée (4) muni d'un circuit d'attaque (2) selon la revendication 3,
**caractérisé en ce que**
la deuxième diode de roue libre (58) est raccordée à un circuit de dérivation (50) par rapport au circuit convertisseur élévateur (24).

5. Procédé pour faire fonctionner un moteur à réluctance commutée (4) muni d'un circuit d'attaque (2) selon l'une des revendications 1 à 4, dans lequel
- la tension d'alimentation (U_{DC}) est prélevée de la source de tension continue (8),
- l'enroulement de phase (20a, 20b, 20c) du moteur à réluctance (4) est chargé avec l'énergie de la tension d'alimentation durant un processus de charge,
- le premier élément de commutation (22a, 22b, 22c) est ouvert et l'énergie de l'enroulement de phase (20a, 20b, 20c) est transférée par décharge au premier condensateur (26, 64) durant un processus de décharge,
- la tension d'alimentation (U_{DC}) est convertie à un niveau de tension supérieur (U_{DC'}) via le circuit convertisseur élévateur (24) durant un processus de conversion ascendante,
- le processus de conversion ascendante est initié en fonction de la vitesse de rotation du moteur à réluctance (4), et
- le deuxième élément de commutation (44) est actionné et l'enroulement de phase (20a, 20b, 20c) est alimenté avec l'énergie stockée par le condensateur (26, 62) durant un processus d'amplification.

6. Procédé selon la revendication 5,
**caractérisé en ce que**
le processus d'amplification est initié à des vitesses de rotation élevées du moteur à réluctance (4).

7. Procédé selon la revendication 5 ou 6,
**caractérisé en ce que**
le processus d'amplification est initié en fonction d'une comparaison de l'énergie stockée dans le premier condensateur (26, 64) et d'un signal de commande (U_{ref}).

8. Procédé selon l'une des revendications 5 à 7,
**caractérisé en ce que**
le processus d'amplification est initié au début du processus de charge.

9. Procédé selon l'une des revendications 5 à 8,
**caractérisé en ce que,**
en cas d'un processus de chargement et d'un processus de déchargement simultanés pour une pluralité d'enroulements de phase (20a, 20b, 20c), un processus de transfert de charge est initié, l'énergie d'un enroulement de phase (20a, 20b, 20c) d'une première phase du moteur étant conduite directement dans un enroulement de phase (20a, 20b, 20c) d'une deuxième phase du moteur.
